# FASCICULE DE BREVET EUROPEEN

(11) **EP 0 494 562 B1**
(45) Date de publication et mention de la délivrance du brevet: **10.08.1994**
(21) Numéro de dépôt: 91403491.3
(22) Date de dépôt: 20.12.1991
(51) Int. Cl.: B62D 29/04, B62D 25/08

(54) **Structure avant en matière plastique pour véhicules automobiles**
Vorderteilstruktur aus Kunststoff für Kraftfahrzeuge
Forward end structure of plastic material for motor cars

(30) Priorité: 08.01.1991 FR 9100143
(43) Date de publication de la demande: 15.07.1992
(73) Titulaire: REGIE NATIONALE DES USINES RENAULT S.A., 92109 Boulogne Billancourt (FR)
(72) Inventeur: Vincent, Philippe, F-92500 Rueil-Malmaison (FR); Demaldent, Jean Michel, F-78500 Sartrouville (FR); Elias, Bernard, F-78990 Elancourt (FR); Lemaire, Guy, F-92500 Rueil Malmaison (FR); van den Berg, Rinus, NL-6123 AG Born (NL); Timmermans, Rob, NL-6003 PB Weert (NL)
(74) Mandataire: Ernst-Schonberg, Michel

(56) Documents cités:
- EP-A- 0 327 415
- EP-A- 0 372 987
- WO-A-88/01960
- FR-A- 2 360 459
- US-A- 3 551 014

## Description

L'invention concerne une structure avant pour véhicules automobiles constituée par un plancher, un sous-ensemble de la cloison pare-feu et deux éléments latéraux.

La présente invention concerne plus particulièrement une structure réalisée à l'aide de composants moulés à basse pression comparativement aux pressions d'emboutissage nécessaires à la fabrication par étapes successives de pièces en tôle. De ce fait, les composants de la structure conforme à l'invention peuvent être réalisés plus économiquement avec des coûts d'outillage réduits.

L'invention a également pour objet une structure allégée convenant aux véhicules dont le groupe moto-propulseur possédera une cylindrée réduite en conséquence, pour réaliser de substantielles économies d'énergie.

L'invention a encore pour objet une structure avant possédant une bonne résistance aux chocs et une perméabilité au son réduite.

On sait par ailleurs que le sous-ensemble de la cloison pare-feu doit supporter le tableau de bord, des accessoires tels qu'un mécanisme d'essuie-glace et divers éléments de fonctionnement du véhicule, tels qu'un maître-cylindre , un vérin d'assistance de l'effort de freinage, le faisceau de câblage électrique, le pédalier et la colonne de direction.

Ces accessoires sont habituellement montés non sans difficultés en raison du manque de rigidité des structures existantes.

La publication FR-A-1.505.089 décrit une carrosserie en matière plastique dont les éléments sont assemblés par des liaisons collées pour être supportées par un châssis conventionnel.

L'invention a pour objet un châssis allégé en matière plastique.

Selon l'invention, le sous-ensemble de la cloison pare-feu, porte des zones d'appui orthogonales pour assurer le positionnement longitudinal et transversal de l'élément latéral de la structure, tandis que ce dernier possède une face d'appui du côté latéral de la cloison pare-feu et une base d'appui pour assurer à la fois la liaison avec le plancher et avec le sous-ensemble de la cloison pare-feu.

D'autres caractéristiques et avantages de l'invention apparaitront à la lecture de la description d'un exemple de réalisation de la structure en référence au dessin annexé dans lequel :
- la figure 1 est une représentation en perspective avec section transversale de la structure assemblée coupée par le plan longitudinal médian du véhicule,

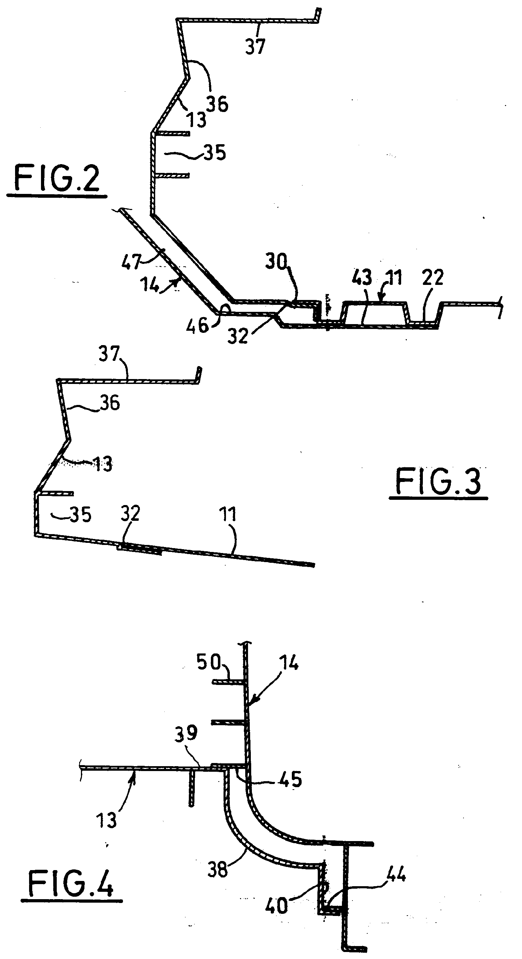

- la figure 2 est une section longitudinale de la structure dans le plan II de la figure 1,
- la figure 3 est une section longitudinale de la structure dans le plan III de la figure 1.
- La figure 4 est une section horizontale de la structure dans le plan IV de la figure 1.
- La figure 5 est une vue éclatée de la structure représentée à la figure 1.

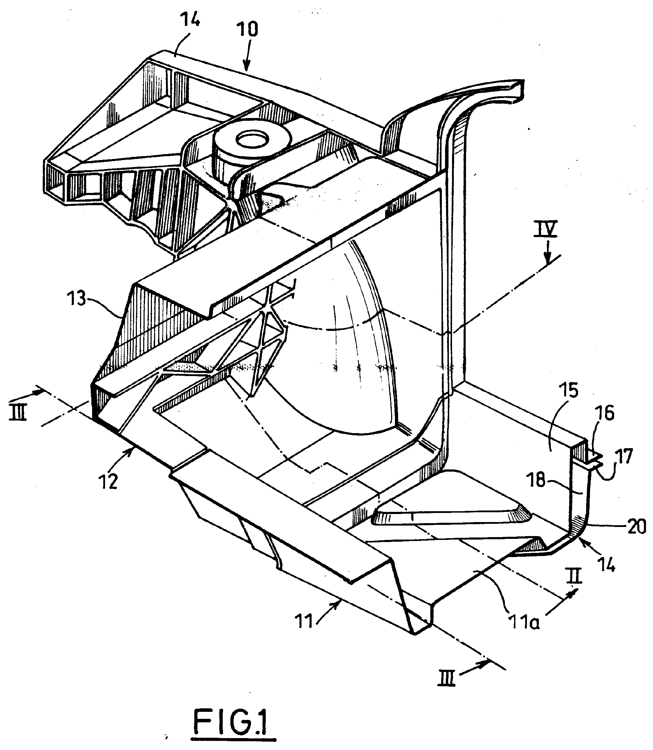

Selon la figure 1 du dessin, la structure avant 10 est formée par un élément structure, dont on a représenté le côté droit. La structure 10 est formée par assemblage de :
- une paroi de plancher 11 moulé dont on a représenté que la moitié latérale de la partie avant 11a,
- un ensemble 12 de la cloison pare-feu 13,
- deux éléments latéraux tels que 14 accolés symétriquement à l'ensemble 12.

Le plancher 11 est constitué par une paroi alvéolée destinée à conférer au plancher une rigidité aux flexions verticales. Le plancher 11 possède aussi deux bords relevés 15 qui se prolongent transversalement vers l'extérieur par un bord d'assemblage 16. Les bords 15, 16 forment conjointement avec un bord d'assemblage 17 de l'élément latéral 14, une poutre creuse 18 qui constitue le longeron latéral inférieur 20. A cet effet, le longeron 20 est réalisé par une liaison collée qui assure d'une part :
- la superposition du bord d'assemblage 16 du plancher 11 avec un bord horizontal 17 de l'élément latéral 14,
- la superposition de la base 22 du plancher 11 avec une base d'appui 43 formée sur la partie inférieure de l'élément latéral 14.

Dans cette configuration, l'élément latéral 14 supporte verticalement le plancher 11 et constitue la paroi externe du longeron 20. Par ailleurs, le longeron 20 délimite en partie une ouverture d'accès 25 dans l'habitacle d'un véhicule automobile dont le châssis serait construit avec la structure conforme à l'invention.

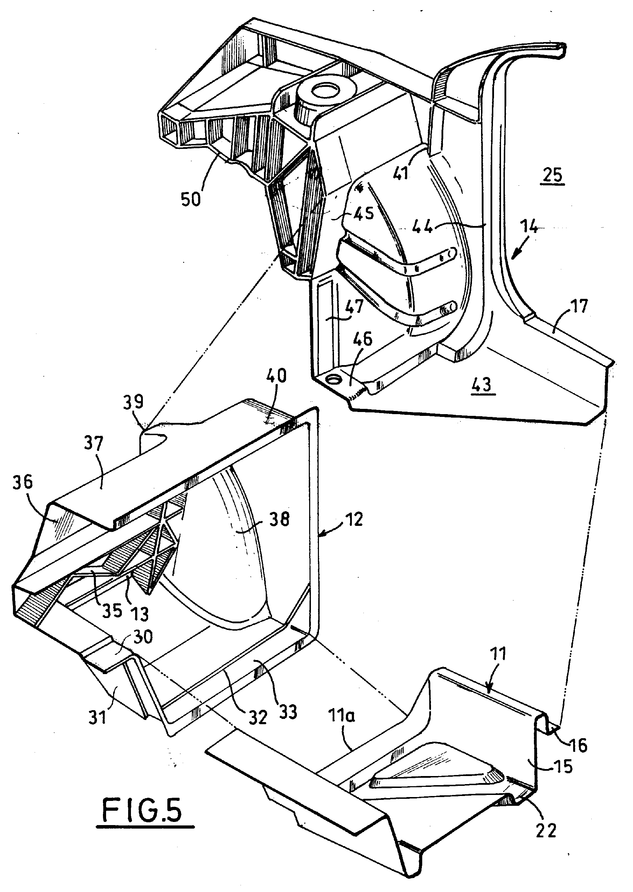

L'ensemble 12 de la cloison pare-feu 13 constitue un coffrage tel que représenté à la figure 5.

L'ensemble 12 possède une bordure d'assemblage 30 sur laquelle prend appui l'extrémité avant du plancher 11. La partie médiane de la bordure 30 s'étend vers le haut et possède une section transversale en "Oméga" pour constituer conjointement avec le plancher 11 un tunnel 31 central. La bordure 30 est limitée vers l'avant par un décrochement 32 afin de confectionner un plan d'assemblage 33 et réaliser le positionnement longitudinal et transversal du plancher 11 par rapport a l'ensemble 12.

L'ensemble 12 possède par ailleurs une traverse 35 cloisonnée destinée à supporter des éléments de fonctionnement du véhicule tels qu'un pédalier, une colonne de direction ou répartir l'énergie libérée au cours d'une collision.

La traverse 35 se prolonge vers le haut par une cloison de séparation 36 limitée par un plateau support 37 de la planche de bord non représentée. L'ensemble 12 possède par ailleurs une cloison de doublage 38 du passage de roue et des appuis 39, 40 orthogonaux de l'élément latéral 14.

Les appuis 39, 40 sont respectivement formés par un nez frontal et par une paroi latérale et permettent le positionnement longitudinal et transversal de l'élément latéral 14.

L'élément latéral 14 représenté à la figure 5 possède des nervures d'appui 41 destinées à s'accoler à la paroi de retour latéral et d'appui 40 formée sur l'ensemble 12. Les nervures 41 sont complétées par des zones d'assemblage 44, 45, 46.

La zone 44 borde transversalement le pied avant de la structure.

La zone 45 limite postérieurement un longeron cloisonné 50 situé à la partie supérieure de la structure et constitue l'appui du nez frontal 39 de l'ensemble 12.

La zone 46 prolonge longitudinalement la base d'appui 43 destinée à s'assembler au plancher 11.

La zone 46 se prolonge par un plan de liaison oblique 47 alvéolé tourné vers la face avant de l'ensemble 12 pour faciliter le positionnement longitudinal de l'élément 14 par rapport audit ensemble.

Le longeron 50 supporte la traverse 35 et possède une rigidité et une inertie suffisantes pour supporter les attaches d'organes de suspension et les paliers élastiques de fixation du moteur.

Sans sortir du cadre de l'invention, il sera bien entendu possible d'imaginer d'autres variantes de réalisation des zones d'assemblage et d'accostage des éléments de la structure, afin de favoriser leur manutention avant de réaliser les liaisons d'assemblage.

## Revendications

1. Structure avant en matière plastique d'une carrosserie de véhicule automobile constituée par un plancher (11) un ensemble (12) de la cloison pare-feu (13) et deux éléments latéraux (14), caractérisée par le fait que l'ensemble (12) de la cloison pare-feu (13) porte des zones d'appui (39, 40) orthogonales pour assurer le positionnement longitudinal et transversal de l'élément latéral (14) et que ce dernier possède des nervures d'appui (41, 44, 45) pour la paroi de retour latéral (40) de la cloison pare-feu (13) et une base d'appui (43) pour assurer à la fois la liaison avec le plancher (11) et avec l'ensemble (12) de la cloison pare-feu (13).

2. Structure selon la revendication 1, caractérisée par le fait que la nervure d'appui (41) sur l'élément latéral (14) de la structure est complétée par une suite de zones d'assemblage (44, 45, 46) avec l'ensemble (12) de la cloison pare-feu (13) et avec le plancher (11) et un plan de liaison (47) oblique tourné vers le dit ensemble (12) pour réaliser le positionnement longitudinal des constituants de la structure.

3. Structure selon l'une quelconque des revendications 1 ou 2, caractérisée par le fait que l'élément latéral (14) s'étend vers l'avant par un longeron cloisonné (50) dont la partie postérieure constitue la zone d'appui (45) de l'ensemble de la cloison pare-feu (13) et que ce dernier porte une traverse (35) cloisonnée de support des éléments de fonctionnement du véhicule pour réaliser conjointement avec ledit longeron (50) une zone de répartition d'énergie en cas de collision.

4. Structure selon l'une quelconque des revendications 1 à 3, caractérisée par le fait que l'élément latéral s'étend vers le haut à partir de la base d'appui (43) de la liaison avec le plancher (11) et constitue la paroi externe d'un longeron latéral (20) en forme de poutre (18) qui délimite en partie une ouverture d'accès (25) dans l'habitacle et supporte verticalement le plancher (11).

## Patentansprüche

1. Vorderteilstruktur aus Kunststoff für die Karosserie eines Kraftfahrzeuges, bestehend aus einem Bodenteil (11) und einem Aufbau (12) aus einer Trennwand (13) und zwei Seitenteilen (14), dadurch gekennzeichnet, daß der Aufbau (12) der Trennwand (13) orthogonale Stützbereiche (39, 40) trägt, um die Längs- und Queraufnahme des Seitenteils (14) zu gewährleisten und daß letzteres Stützrippen (41, 44, 45) besitzt für die seitliche Umlenkwand (40) der Trennwand (13), sowie eine Stützfläche (43) besitzt, um zugleich die Verbindung mit dem Bodenteil (11) und mit dem Aufbau (12) der Trennwand (13) zu gewährleisten.

2. Struktur nach Anspruch 1, dadurch gekennzeichnet, daß die Stützrippe (41) auf dem Seitenteil (14) der Struktur vervollständigt wird durch eine Folge von Zusammenbaubereichen (44, 45, 46) mit dem Aufbau (12) der Trennwand (13) und mit dem Bodenteil (14) in einer Verbindungsebene (47), die schräg in Richtung zum Aufbau (12) hin geneigt ist, um so die Längsanordnung der Einzelteile der Struktur zu verwirklichen.

3. Struktur nach einem der Ansprüche 1 oder 2, dadurch gekennzeichnet, daß das Seitenteil (14) sich nach vorne mittels eines Trennholmes (50) erstreckt, dessen hinterer Abschnitt den Stützbereich (45) für den Aufbau der Trennwand (13) bildet, wobei letztere eine abgetrennte Strebe (45) trägt, die als Halterung für betriesnotwendige Kraftfahrzeugteile dient, um so zusammen mit dem Holm (50) im Falle einer Kollision einen energieverzehrenden Abschnitt zu bilden.

4. Struktur nach einem der Ansprüche 1 bis 3, dadurch gekennzeichnet, daß sich das Seitenteil nach oben erstreckt, ausgehend von einem unteren Stützteil (43) der Verbindung mit dem Bodenteil (11) und die Außenwand eines Seitenholmes (20) in Form eines Balkens (18) bildet, welcher teilweise eine Zugangsöffnung (25) zur Fahrgastzelle begrenzt und in senkrechter Richtung das Bodenteil (11) trägt.

## Claims

1. A front structure in plastic material of a motor vehicle bodywork formed by a floor (11), an assembly (12) of fire break partition (13) and two lateral members (14), characterized in that the assembly (12) of the fire break partition (13) bears orthogonal support zones (39, 40) in order to ensure the longitudinal and transverse positioning of the lateral member (14) and in that the latter comprises support ribs (41, 44, 45) for the lateral return wall (40) of the fire break partition (13) and a support base (43) in order to provide for the connection with the floor (11) and with the assembly (12) of the fire break partition (13).

2. A structure as claimed in claim 1, characterized in that the support rib (41) on the lateral member (14) of the structure is supplemented by a sequence of assembly zones (44, 45, 46) for assembly with the assembly (12) of the fire break partition (13) and with the floor (11) and an inclined plane of connection (47) facing towards the assembly (12) in order to carry out the longitudinal positioning of the components of the structure.

3. A structure as claimed in any one of claims 1 or 2, characterized in that the lateral member (14) is forwardly extended by a partitioned longitudinal strut (50) whose rear portion forms the support zone (45) for the assembly of the fire break partition (13) and in that the latter bears a partitioned crossbar (35) supporting the operating components of the vehicle in order to provide, jointly with the longitudinal strut (50), an energy distribution zone in the event of collision.

4. A structure as claimed in any one of claims 1 to 3, characterized in that the lateral member extends upwards from the support base (43) of the connection with the floor (11) and forms the outer wall of a lateral longitudinal strut (20) in the form of a beam (18) which partly bounds an access opening (25) into the passenger space and vertically supports the floor (11).
